# EUROPÄISCHE PATENTANMELDUNG

(11) **EP 1 652 826 A1**
(43) Veröffentlichungstag der Anmeldung: **03.05.2006**
(21) Anmeldenummer: 05023663.7
(22) Anmeldetag: 28.10.2005
(51) Int. Cl.: C02F 9/06, C02F 1/461, C02F 1/467, C02F 1/28, C02F 1/00, C02F 5/00

(54) **Trinkwasserspender**

(30) Priorität: 29.10.2004 DE 102004052939
(71) Anmelder: Lüdi, Hugues, 8634 Hornbrechtikon (CH); Neuenschwander, Martin, 3034 Murzelen (CH)
(72) Erfinder: Lüdi, Hugues, 8634 Hornbrechtikon (CH); Neuenschwander, Martin, 3034 Murzelen (CH)
(74) Vertreter: Lucht, Silvia

(57) **Zusammenfassung**

Es wird ein Trinkwasserspender mit einem Gehäuse, mit einer Trinkwasserzufuhr und mit einem an dem Gehäuse angeordneten Zapfhahn vorgeschlagen. Dabei ist ein Wasseraufbereitungsmodul (4, 19) zur Verbesserung der Qualität des Trinkwassers mit mindestens einer Elektrolysezelle (9, 10, 20, 21) und mindestens einer Aktivkohlezelle (11, 22) vorgesehen. Ein massiver Gehäuseblock (8) des Wasseraufbereitungsmoduis (4, 19) weist je eine Kammer für jede der Elektrolysezellen (9, 10, 20, 21) und für jede der Aktivkohlezellen (11, 22) auf. In dem massiven Gehäuseblock (8) sind als Leitungen zum Verbinden der Elektrolysezellen (9, 10, 20, 21) und Aktivkohlezellen (11, 22) miteinander Kanäle (15) vorgesehen.

## Beschreibung

### Stand der Technik

Die Erfindung geht aus von einem Trinkwasserspender nach dem Oberbegriff des Anspruchs 1.

Derartige Trinkwasserspender dienen dazu, Trinkwasser im Bedarfsfall zur Verfügung zu stellen. Die gewünschte Menge an Trinkwasser kann über einen Zapfhahn aus einem Wasservorratsbehälter oder aus dem öffentlichen Netz der Trinkwasserversorgung entnommen werden. Bei bekanntem Wasservorratsbehältern handelt es sich um Flaschen oder Behältnisse, die mit ihrer Öffnung nach unten weisend auf den Trinkwasserspender aufgesetzt und an die Leitung des Trinkwasserspenders angeschlossen werden können. Als nachteilig erweist sich dabei, dass bei der Entnahme von Trinkwasser über dem Zapfhahn Luft in den Wasservorratsbehälter gelangt. Diese Luft enthält typischerweise Krankheitserreger, Keime und sonstige Verunreinigungen. Während Zeit, die vergeht, bis die Flasche vollständig entleert ist, können sich die Krankheitserreger und Keime ungehindert vermehren. Eine Vermehrung findet unter Raumtemperatur bereits in kurzer Zeit statt. Es kommt daher zu einer Anreicherung an Krankheitserregern und Keimen, die die Gesundheit der das Trinkwasser zu sich nehmenden Personen stark beeinträchtigen können. Es besteht daher ein Bedarf, die Qualität des Wassers in dem Wasservorratsbehälter zu verbessern.

Wird das Wasser aus dem öffentlichen Netz der Trinkwasserversorgung entnommen, so besteht wie bei einem Wasservorratsbehälter der Bedarf, die Qualität des Wassers zu verbessern, in dem es beispielsweise von Keimen und Schwermetallen befreit wird, ohne dass hierzu dem Trinkwasser Fremdstoffe wie Chlor oder Ozon zugesetzt werden, und ohne dass ein Filter eingesetzt werden muss.

### Die Erfindung und ihre Vorteile

Gegenüber bekannten Trinkwasserspendern hat der erfindungsgemäße Trinkwasserspender mit den Merkmalen des Anspruchs 1 den Vorteil, dass ein Wasseraufbereitungsmodul zur Verbesserung der Wasserqualität vorgesehen ist, welches mit einer oder mehreren Elektrolysezellen und einer oder mehreren Aktivkohlezellen ausgestattet ist. Jede der Elektrolysezellen enthält eine Anode und eine Kathode. Diese sind entweder als parallele Platten oder als koaxial angeordnete Röhren ausgebildet. An der Anode entsteht nascierender Sauerstoff, der zu einer Abtötung der Keime und zur Zustörung von Toxinen und Pyrogenen im Wasser beiträgt. Dies wird als Detoxifikations-Effekt bezeichnet. An der Kathode werden Metalle, welche als Metallsalze im Wasser enthalten sind, abgeschieden und damit aus dem Wasser entfernt. Durch die Aktivkohle, beispielsweise in Form von Kohlenstoff-Granulat, Graphit-Kristallen oder amorphem Kohlenstoff werden unerwünschte oder schädliche Farb-, Geruchs- oder Geschmacksstoffe wie beispielsweise Chlor und Ozon aus dem Trinkwasser entfernt. Zusätzlich zu der Aktivkohle können weitere Stoffe eingesetzt werden, welche eine katalytische Funktion bei der Reaktion von Sauerstoff, Ozon und Wasserstoff mit verschiedenen Metallverbindungen im Wasser haben. Die dabei entstehenden Metalloxide fallen aus.

Elektrolysezellen, Aktivkohlezellen und eventuelle weitere Zellen mit zusätzlichen Stoffen sind in einem massiven Gehäuseblock angeordnet. Hierzu sind in dem Gehäuseblock Kammern für die Zellen vorgesehen. Das Trinkwasser strömt von einer der Zellen zur nächsten Zelle über Kanäle, welche in den Gehäuseblock eingearbeitet sind. Auf Schläuche oder Rohre zum Verbinden der Elektrolysezellen, Aktivkohlezellen und Quarzkristallzellen kann daher verzichtet werden. Der Gehäuseblock weist an seiner Außenseite als wasserführende Leitungen lediglich eine Zuleitung zum Zuführen des aufzubereitenden Trinkwassers und eine Trinkwasserableitung zum Ableiten des aufbereiteten Trinkwassers auf. Bei Bedarf kann ein zusätzliches Ventil vorgesehen sein, welches ein Teil des Wassers aussondert und als Abwasser abgeleitet. Vorteilhafterweise ist das Ventil in den Gehäuseblock integriert. Der Gehäuseblock weist in diesem Fall eine Abwasserableitung auf, über die das Abwasser einem in dem Gehäuse angeordneten Abwasser-Auffangbehälter zugeleitet wird. Dieser muss regelmäßig manuell oder automatisch über eine Pumpe entleert werden. Darüber hinaus sind elektrische Leitungen für die Anoden und die Kathoden vorgesehen. Der Gehäuseblock kann aus zwei Hälften bestehen, die nach dem Einsetzen der Elektrolysezellen, der Aktivkohlezellen und gegebenenfalls weiterer Zellen zusammengefügt und abgedichtet werden.

Nach einer vorteilhaften Ausgestaltung der Erfindung ist zwischen der Anode und der Kathode der Elektrolysezelle ein Diaphragma angeordnet. Dieses dient dazu, das aufzubereitende Trinkwasser zunächst an der Anode entlang zu führen und anschließend an der Kathode. Das Trinkwasser strömt dabei zunächst durch den Teil der Elektrolysezelle hindurch, der durch die Anode und das Diaphragma begrenzt wird. Danach wird es durch den Teil der Elektrolysezelle geleitet, welcher durch die Kathode und das Diaphragma begrenzt wird. Die beiden oben beschriebenen Prozesse an der Anode und der Kathode finden daher räumlich getrennt und zeitlich versetzt statt. Als Diaphragma eignen sich formstabile Teile aus einem wasserdurchlässigen Material, welches den elektrischen Strom nicht leitet.

Nach einer weiteren vorteilhaften Ausgestaltung der Erfindung wird das Wasseraufbereitungsmodul über eine Spannungsquelle und eine elektrische Schaltung mit Gleichspannung versorgt. Um eine mit hohen Spannungen verbundene Verletzungsgefahr ausschließen, wird das Wasseraufbereitungsmodul mit einer Spannung von weniger als 50 V betrieben. Dies gilt ebenso für die Spannung, mit der Pumpen zur Entnahme des Trinkwassers am Zapfhahn oder zur Zirkulation des Trinkwassers durch das Wasseraufbereitungsmodul betrieben werden.

Nach einer weiteren vorteilhaften Ausgestaltung der Erfindung ist eine Regelungseinrichtung vorgesehen, die die Stromstärke, welche vom Leitwert der Trinkwassers abhängt, auf einem konstanten Wert hält. Hierzu wird die Spannung zwischen 0 V und einer maximalen Spannung geregelt. Alternativ dazu kann die Spannung auch auf einem konstanten Wert gehalten werden.

Nach einer weiteren vorteilhaften Ausgestaltung der Erfindung ist in Strömungsrichtung des Trinkwassers vor dem Wasseraufbereitungsmodul ein Filter angeordnet um grobe Verunreinigungen aus dem Trinkwasser zu entfernen. Derartige Verunreinigungen könnten das Wasseraufbereitungsmodul in seiner Funktionsweise beeinflussen. Die Porengröße des Filters kann beispielsweise 5 µm betragen. Durch das Filter können außerdem unerwünschte Geschmacksträger aus dem Wasser ausgesondert werden.

Nach einer weiteren vorteilhaften Ausgestaltung der Erfindung ist ein Entkalkungs-Behälter mit einem der Entkalkung des Trinkwasserspenders dienenden Stoff vorgesehen. Dabei kann es sich beispielweise um Zitronensäure oder Essigsäure oder um die entsprechenden Salze handeln, welche durch das Lösen in Wasser diese Säuren bilden. Der Entkalkungs-Behälter ist über eine Leitung mit dem Wasseraufbereitungsmodul und/ oder der Zuleitung und/ oder der Trinkwasserableitung verbunden. In gewissen Zeitabständen werden das Wasseraufbereitungsmodul und die Leitungen von Kalkablagerungen befreit. Dieser Vorgang kann automatisch gestartet werden, beispielsweise über eine Uhr. Hierzu wird die Spannung am Wasseraufbereitungsmodul automatisch abgeschaltet um eine Beschädigung zu vermeiden. Die der Entkalkung dienende Säure kann nach dem Vorgang der Entkalkung in dem Abwasser-Auffangbehälter gesammelt werden. Das Wasseraufbereitungsmodul und die Leitungen werden mehrmals mit Trinkwasser gespült, um die Säure zu beseitigen.

Nach einer weiteren vorteilhaften Ausgestaltung der Erfindung ist als Trinkwasserzufuhr ein Wasservorratsbehälter vorgesehen. Dabei kann es sich um einen starren oder flexibler Behälter handeln. Ein flexibler Behälter in Form eines Beutels hat den Vorteil, dass eine Wasserentnahme ohne das Eindringen von Luft möglich ist. Dabei wird ausgenutzt, dass bei der Entnahme von Wasser der Beutel durch den Luftdruck der Umgebungsluft in sich zusammenfällt. Das Volumen des aus dem Beutel ausströmenden Wassers wird nicht durch Luft ersetzt. Da keine Luft in den Beutel eindringen kann, können auch keine Krankheitserreger oder Keime in das Trinkwasser gelangen.

Nach einer vorteilhaften Ausgestaltung der Erfindung ist ein zusätzliches Gehäuse, ein Behälter, ein Gefäß oder ein Rahmen zum Stützen des flexiblen Beutels vorgesehen. Ein derartiges Gehäuse kann den flexiblen Behälter in eine gewünschte Form bringen. Das Gehäuse, der Behälter, das Gefäß oder der Rahmen kann Teil des Gehäuses des Trinkwasserspenders sein. Er sorgt dafür, dass der Beutel bei der Entnahme von Wasser nicht so in sich zusammenfällt, dass eine weitere Entnahme verhindert wird. Darüber hinaus kann der Rahmen o. ä. so als separates Bauteil vorgesehen sein, so dass er zusammen mit dem flexiblen Behälter vom dem Gehäuse entnommen werden und zur Wiederbefüllung transportiert werden kann.

Nach einer weiteren vorteilhaften Ausgestaltung der Erfindung ist eine Pumpe zum Entnehmen des Wassers aus dem Beutel vorgesehen. Sie unterstützt die Entnahme des Wassers. Außerdem wird das Anordnen des Wasservorratsbehälters unterhalb des Zapfhahns ermöglicht.

Nach einer weiteren vorteilhaften Ausgestaltung der Erfindung ist an dem flexiblen Beutel ein Ventil vorgesehen, welches über eine Kupplung an die Leitung des Trinkwasserspender einzuschließen ist. Dabei kann es sich insbesondere um eine Schnellkupplung handeln. Der Austausch eines leeren gegen einen vollen Beutel wird dadurch erleichtert.

Nach einer weiteren vorteilhaften Ausgestaltung der Erfindung weist der Beutel ein Ventil auf, welches eine Wiederbefüllung eines entleerten flexiblen Beutel ermöglicht. Hierzu wird der flexible Beutel beispielsweise an einen Wasserhahn über eine Kupplung angeschlossen. Für den Transport des gefüllten Beutels zum Trinkwasserspender kann ein Verschluss für das Ventil vorgesehen sein, damit während des Transportes kein Wasser aus dem Ventil ausfließen kann. Das Ventil kann identisch mit dem ersten Ventil sein, das der Entnahme des Wassers im Trinkwasserspender dient. Es kann jedoch auch ein separates Ventil zu Wiederbefüllung vorgesehen sein.

Nach einer weiteren vorteilhaften Ausgestaltung der Erfindung ist der Wasservorratsbehälter mit Rädern oder Rollen ausgestattet. Er wird über eine Rasteinrichtung mit dem Gehäuse des Trinkwasserspenders verbunden. Soll der Behälter ausgetauscht oder an einem Wasserhahn wieder aufgefüllt werden, so kann er geschoben werden und muss nicht getragen werden. Da der Wasservorratsbehälter typischerweise ein Volumen von 10 I und mehr aufweist, ist das Gewicht des gefüllten Wasservorratsbehälters relativ groß.

Nach einer weiteren vorteilhaften Ausgestaltung der Erfindung ist ein Rezirkulierungsmodul vorgesehen. Dieses weist eine Pumpe und einem zeitabhängigen Schalter auf. Er sorgt dafür, dass in regelmäßigen Zeitabständen das Wasser im Wasservorratsbehälter durch das Wasseraufbereitungsmodul gepumpt wird. Von dort gelangt es zurück in den Wasservorratsbehälter. Dadurch wird verhindert, dass sich Krankheitserreger oder Keime im Wasservorratsbehälter bei längeren Standzeiten in großem Umfang vermehren können. Das Rezirkulierungsmodul sorgt für eine Desinfektion der Leitungen des Trinkwasserspenders und verhindert eine retrograde Verkeimung. Es kann auch bei Trinkwasserspendern eingesetzt werden, welche keinen Vorratsbehälter aufweisen sondern direkt an ein Trinkwassernetz angeschlossen sind.

Der Trinkwasserspender kann auch eingesetzt werden, wenn anstelle von Trinkwasser andere Getränke ausgegeben werden sollen. Hierzu ist der Wasservorratsbehälter mit dem gewünschten Getränk befüllt, oder dem Wasser wird über einen gesonderten Behälter ein zusätzlicher Geschmacksträger zugefügt.

Nach einer weiteren vorteilhaften Ausgestaltung der Erfindung ist eine Einrichtung zum Kühlen oder Gefrieren des Trinkwassers und/ oder eine Einrichtung zum Erhitzen des Trinkwassers in dem Gehäuse vorgesehen. Auf diese Weise können heiße Getränke wie Kaffee oder Tee, kalte Getränke oder Eiswürfel hergestellt und ausgegeben werden.

Nach einer weiteren vorteilhaften Ausgestaltung der Erfindung sind in oder an dem Gehäuse ein Rechner, eine Eingabeeinrichtung und/ oder eine Anzeigeeinrichtung angeordnet. Der Trinkwasserspender kann damit zusätzlich zum Austausch von Informationen, zum Anzeigen von Werbung und zur Kommunikation eingesetzt werden.

Weitere Vorteile und vorteilhaften Ausgestaltungen der Erfindung sind der nachfolgenden Beschreibung, den Ansprüchen und der Zeichnung zu entnehmen.

### Zeichnung

In der Zeichnung ist ein Ausführungsbeispiel eines erfindungsgemäßen Trinkwasserspenders dargestellt. Dieses Ausführungsbeispiel ist im folgenden näher beschrieben. Es zeigt:
- Figur 1: schematische Darstellung der Bestandteile eines Trinkwasserspenders,
- Figur 2: Wasseraufbereitungsmodul des Trinkwasserspenders gemäß Figur 1,
- Figur 3: zweites Ausführungsbeispiel eines Wasseraufbereitungsmoduls für einen Trinkwasserspender gemäß Figur 1.

### Beschreibung des Ausführungsbeispiels

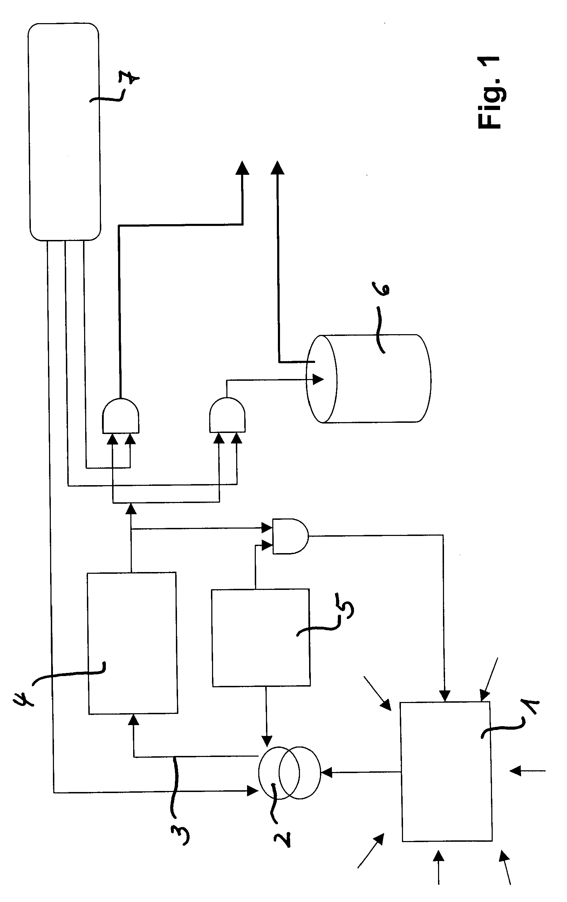

In Figur 1 sind die Bestandteile eines Trinkwasserspenders und deren Verknüpfung schematisch dargestellt. Als Wasservorratsbehälter dient ein flexibler Beutel 1. Auf die typischerweise aus Folie hergestellte Behälterwand wirkt der Atmosphärendruck der Umgebungsluft. Dies ist durch Pfeile dargestellt. Das Wasser des flexiblen Beutels 1 gelangt über eine Pumpe 2 und eine Zuleitung 3 zum Wasseraufbereitungsmodul 4. Von dort fließt das Wasser entweder in Richtung eines in der Zeichnung nicht dargestellten Zapfhahns oder zurück in den Beutel 1. Das Reinigen des Wassers durch das Wasseraufbereitungsmodul 4 wird in regelmäßigen zeitlichen Abständen durch das Rezirkulierungsmodul 5 ausgelöst. Dies geschieht nur bei geschlossenem Zapfhahn. Die Pumpe 2 sorgt dabei dafür, dass das Wasser aus dem Beutel 1 in das Wasseraufbereitungsmodul 4 und von dort zurück in den Beutel 1 fließt.

Der Trinkwasserspender ist mit einer Kühleinrichtung 6 ausgestattet. Über einen Schalter 7 kann ausgewählt werden, ob gekühltes oder ungekühltes Wasser entnommen werden soll.

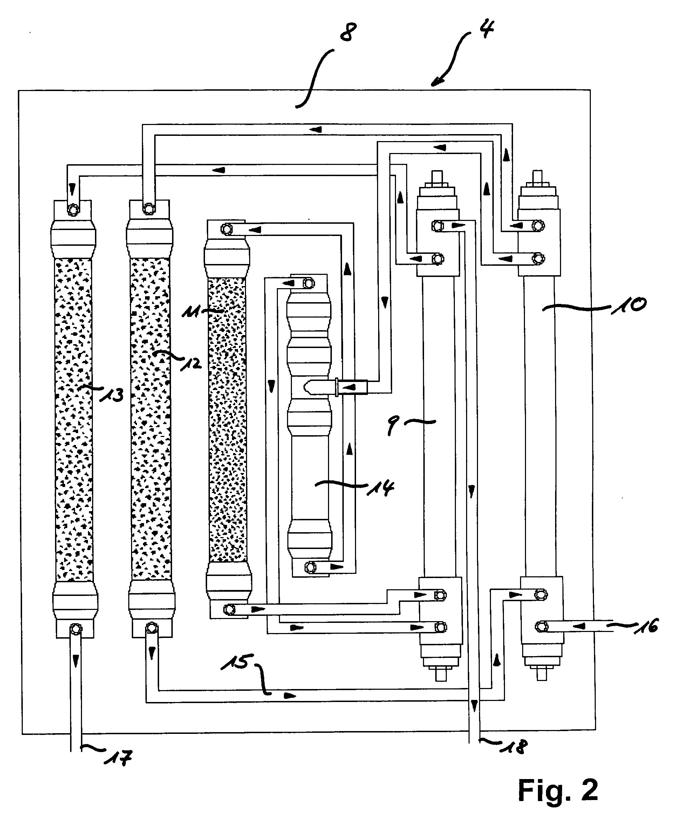

Figur 2 zeigt das Wasseraufbereitungsmodul 4 im Detail. In einem massiven Gehäuseblock 8 sind zwei Elektrolysezellen 9 und 10, eine Aktivkohlezelle 11, zwei Quarzkristallzellen 12 und 13 und eine Verteilerzelle 14 angeordnet. Über Kanäle 15 wird das Trinkwasser von der Zuleitung 16 über die Elektrolysezelle 9, die Quarzkristallzelle 12, die Elektrolysezelle 10, die Aktivkohlezelle 11 und die Quarzkristallzelle 13 der Trinkwasserableitung 17 zugeleitet. Ein Teil des Trinkwassers wird in der Verteilerzelle 14 ausgesondert und gelangt über die Abwasserableitung 18 in einen in der Zeichnung nicht dargestellten Abwasser-Auffangbehälter. Hierzu ist die Verteilerzelle 14 mit einem in der Zeichnung nicht erkennbaren Ventil ausgestattet.

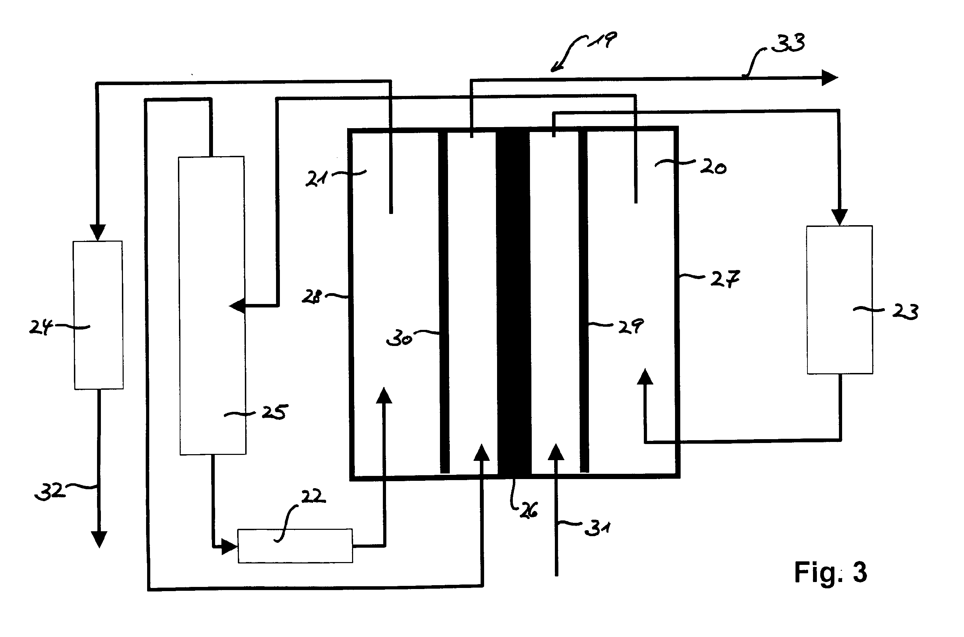

Figur 3 zeigt ein zweites Ausführungsbeispiel eines Wasseraufbereitungsmoduls 19. Der Gehäuseblock des Wasseraufbereitungsmoduls 19 ist in Figur 3 zur Vereinfachung nicht dargestellt. Das Wasseraufbereitungsmodul 19 weist ebenfalls zwei Elektrolysezellen 20 und 21, eine Aktivkohlezelle 22, zwei Quarzkristallzellen 23 und 24 und eine Verteilerzelle 25 mit einem in der Zeichnung nicht erkennbaren Ventil auf. Während die beiden Elektrolysezellen 9 und 10 des Wasseraufbereitungsmoduls 4 die Form einer Röhre aufweisen mit einer zylindrischen Anode und einer koaxial dazu angeordneten zylindrischen Kathode, sind die Anode 26 und die Kathoden 27 und 28 der beiden Elektrolysezellen 20 und 21 des Wasseraufbereitungsmoduls 19 als ebene Platten ausgebildet. Dabei sind die beiden Elektrolysezellen wie ein Sandwich aufgebaut. Die Anode 26 bildet für beide Elektrolysezellen die positive Elektrode. Zwischen der Kathode 27 und der Anode 26 befindet sich ein Diaphragma 29. Zwischen der Kathode 28 und der Anode 26 befindet sich ebenfalls ein Diaphragma 30. Durch die beiden Diaphragmen 29 und 30 wird das Wasser kanalisiert. Sie bewirken, dass das Wasser zunächst an der Anode 26 der Elektrolysezelle 20, dann an der Kathode 27 der Elektrolysezelle 20, schließlich an der Anode 26 der Elektrolysezelle 21 oder an der Kathode 28 der Elektrolysezelle 21 entlang fließt. Die Zuleitung 31 führt das aufzubereitende Trinkwasser der Elektrolysezelle 20 zu. Über die Trinkwasserableitung 32 wird das aufbereitete Trinkwasser abgeleitet. Das Abwasser wird über die Abwasserleitung 33 abgeführt.

Bezugszahlenliste
- 1: flexibler Beutel
- 2: Pumpe
- 3: Zuleitung
- 4: Wasseraufbereitungsmodul
- 5: Rezirkulierungsmodul
- 6: Kühleinrichtung
- 7: Schalter
- 8: Massiver Gehäuseblock des Wasseraufbereitungsmoduls
- 9: Elektrolysezelle
- 10: Elektrolysezelle
- 11: Aktivkohlezelle
- 12: Quarzkristallzelle
- 13: Quarzkristallzelle
- 14: Verteilerzelle
- 15: Kanal
- 16: Zuleitung
- 17: Trinkwasserableitung
- 18: Abwasserableitung
- 19: Wasseraufbereitungsmodul
- 20: Elektrolysezelle
- 21: Elektrolysezelle
- 22: Aktivkohlezelle
- 23: Quarzkristallzelle
- 24: Quarzkristallzelle
- 25: Verteilerzelle
- 26: Anode
- 27: Kathode
- 28: Kathode
- 29: Diaphragma
- 30: Diaphragma
- 31: Trinkwasserzuleitung
- 32: Trinkwasserableitung
- 33: Abwasserableitung

## Patentansprüche

1. Trinkwasserspender
mit einem Gehäuse,
mit einer Trinkwasserzufuhr,
mit einem an dem Gehäuse angeordneten Zapfhahn,
**dadurch gekennzeichnet,**
**dass** ein Wasseraufbereitungsmodul (4, 19) zur Verbesserung der Qualität des Trinkwassers mit mindestens einer Elektrolysezelle (9, 10, 20, 21) und mindestens einer Aktivkohlezelle (11, 22) vorgesehen ist,
**dass** ein massiver Gehäuseblock (8) des Wasseraufbereitungsmoduls (4, 19) vorgesehen ist mit je einer Kammer für jede der Elektrolysezellen (9, 10, 20, 21) und für jede der Aktivkohlezellen (11, 22),
**dass** in dem massiven Gehäuseblock (8) als Leitungen zum Verbinden der Elektrolysezellen (9, 10, 20, 21) und Aktivkohlezellen (11, 22) miteinander Kanäle (15) vorgesehen sind, und dass an der Außenseite des massiven Gehäuseblocks (8) eine mit der Trinkwasserzufuhr verbundene Zuleitung (3, 16, 31) für das aufzubereitende Trinkwasser und eine mit dem Zapfhahn verbundene Trinkwasserableitung (17, 32) für das aufbereitete Trinkwasser vorgesehen sind.

2. Trinkwasserspender nach Anspruch 1, **dadurch gekennzeichnet, dass** zwischen der Anode (26) und der Kathode (27, 28) der Elektrolysezelle (9, 10, 20, 21) ein Diaphragma (29, 30) angeordnet ist.

3. Trinkwasserspender nach Anspruch 1 oder 2, **dadurch gekennzeichnet, dass** eine Spannungsquelle und eine elektrische Schaltung zur Versorgung des Wasseraufbereitungsmoduls (4, 19) mit einer Gleichspannung vorgesehen sind.

4. Trinkwasserspender nach Anspruch 3, **dadurch gekennzeichnet, dass** die elektrische Schaltung mit einer Regelungseinrichtung ausgestattet ist, welche den Strom auf einem konstanten Wert hält.

5. Trinkwasserspender nach einem der vorhergehenden Ansprüche, **dadurch gekennzeichnet, dass** in Strömungsrichtung des Trinkwassers vor dem Wasseraufbereitungsmodul (4, 19) ein Filter angeordnet ist um grobe Verunreinigungen aus dem Trinkwasser zu entfernen.

6. Trinkwasserspender nach einem der vorhergehenden Ansprüche, **dadurch gekennzeichnet, dass** ein Entkalkungs-Behälter mit einem der Entkalkung des Trinkwasserspenders dienenden Stoff vorgesehen ist, dass der Entkalkungs-Behälter über eine Leitung mit dem Wasseraufbereitungsmodul (4, 19) und/ oder der Zuleitung (16, 31) und/ oder der Trinkwasserableitung (17, 32) verbunden ist.

7. Trinkwasserspender nach einem der vorhergehenden Ansprüche, **dadurch gekennzeichnet, dass** als Trinkwasserzufuhr ein Anschluss an das öffentliche Netz der Trinkwasserversorgung vorgesehen ist.

8. Trinkwasserspender nach einem der Ansprüche 1 bis 6, **dadurch gekennzeichnet, dass** als Trinkwasserzufuhr ein Wasservorratsbehälter (1) in dem Gehäuse vorgesehen ist.

9. Trinkwasserspender nach Anspruch 8, **dadurch gekennzeichnet, dass** ein Rezirkulierungsmodul (5) mit einer Pumpe und einem zeitabhängigen Schalter vorgesehen ist, welches das Wasser des Wasservorratsbehälters (1) in regelmäßigen Zeitabständen durch das Wasseraufbereitungsmodul (4) und zurück in den Wasservorratsbehälter pumpt.

10. Trinkwasserspender nach einem der vorhergehenden Ansprüche, **dadurch gekennzeichnet, dass** an dem Wasseraufbereitungsmodul eine Abwasserableitung (18, 33) für das nach der Wasseraufbereitung auszusondernde Abwasser vorgesehen ist.

11. Trinkwasserspender nach einem der vorhergehenden Ansprüche, **dadurch gekennzeichnet, dass** in oder an dem Gehäuse ein Rechner und/oder eine Eingabeeinrichtung und/ oder eine Anzeigeeinrichtung angeordnet sind.
